# EUROPEAN PATENT APPLICATION

(11) **EP 4 443 626 A1**
(43) Date of publication of application: **09.10.2024**
(21) Application number: 22928147.2
(22) Date of filing: 03.08.2022
(51) Int. Cl.: H01M 50/291, H01M 50/204

(54) **STACKED BATTERY PACK AND BATTERY CABINET**

(30) Priority: 24.02.2022 CN 202220387380 U
(71) Applicant: Pylon Technologies Co., Ltd., Shanghai 201203 (CN)
(72) Inventor: ZHANG, Chao, Shanghai 201203 (CN); SU, Kaicheng, Shanghai 201203 (CN); WANG, Zhonghe, Shanghai 201203 (CN); SHI, Lu, Shanghai 201203 (CN)
(74) Representative: Bryn Aarflot AS
(86) International application number: PCT/CN2022/110011
(87) International publication number: WO 2023/159880

(57) **Abstract**

Provided in the present application are a stacked battery pack and a battery cabinet, relating to the technical field of batteries. In the stacked battery pack, fixed supports are arranged on the edges of the bottom of a battery pack body, and fixed handles are arranged on the edges of the top of the battery pack body, each fixed handle protruding outwards and being arranged corresponding to an adjacent fixed support and detachably connected thereto, so that two adjacent battery pack bodies are fixedly stacked. Compared with the prior art, the present application uses a protruding handle structure, so that squeezing of the internal space of a battery pack body can be avoided, thereby facilitating maximization of space utilization of a battery pack. Besides, by means of detachable connection of the fixed handles and the fixed supports on the adjacent battery pack bodies, limitation and fixation of the adjacent battery pack bodies are implemented, so that thin-type stacking can be achieved, and the occupied area after stacking is small and the form is simple. In addition, because the handles are of protruding structures, installation and operation are convenient.

## Description

### CROSS-REFERENCE TO RELATED APPLICATION

The present invention claims priority to Chinese Patent Application No. 202220387380.9, filed with the Chinese Patent Office on February 24, 2022, entitled "STACKED BATTERY PACK AND BATTERY CABINET" the whole contents of which are incorporated herein by reference.

### TECHNICAL FIELD

The present invention relates to the technical field of batteries, and specifically relates to a stacked battery pack and a battery cabinet.

### BACKGROUND ART

In recent years, with an increasing number of stacked energy storage batteries in various forms, the market has higher requirements for an occupied area and a front-to-rear depth size of the battery, and also has higher requirements for the fixing operation method after stacked.

At present, various manufacturers have multiple methods to solve the problems existing in the battery stacking technology. For example, after the batteries are stacked in a vertical direction, the left and right sides of the upper battery are concaved to form buckle areas, and then screws are screwed from top to bottom inside the concave space of the buckle, so as to fix two upper and lower batteries together. However, since the concave space is smaller by adopting this stacking and fixation method, it causes inconvenience when screwing the screw; and at the same time the buckle is concave, which reduces an internal space of the battery, which is not beneficial for maximization of space utilization.

### SUMMARY

The object of the present invention is to provide a stacked battery pack and a battery cabinet, which can realize thin stacking. The battery pack after stacked has a smaller occupied area, and has simple shapes; is easy to be installed and operated; does not reduce the internal space of the battery; and is beneficial for maximization of space utilization.

The embodiments of the present invention are realized as follows.

In a first aspect, the present invention provides a stacked battery pack, including battery pack bodies, a fixed handle, and a fixed support, wherein the battery pack bodies are configured for stacking; the fixed support is arranged at edges of bottom of the battery pack bodies; and the fixed handle is arranged at edges of top of the battery pack bodies, and is arranged in correspondence and detachably connected with the adjacent fixed support, so that the two adjacent battery pack bodies are fixedly stacked.

In an optional embodiment, the fixed handle is arranged at the edges of two sides of the top of the battery pack bodies, and extends from the two sides of the top of the battery pack bodies; and the fixed support is arranged at edges of two sides of the bottom of the battery pack bodies, and extends from the two sides of the bottom of the battery pack bodies, wherein the fixed handle is provided with a first connection hole and the fixed support is provided with a second connection hole, wherein the second connection hole is detachably assembled with a connector, and the connector is configured to connect the adjacent fixed support and fixed handle.

In an optional embodiment, the fixed handle is of a hollow structure, and a grasping opening is formed inside the fixed handle.

In an optional embodiment, a side surface of the battery pack bodies is further provided with a wiring structure, and the wiring structure is connected with an electrical harness, wherein the electrical harness passes through the grasping opening to be stored inside the fixed handle.

In an optional embodiment, a side panel is further arranged on the side surface of the battery pack bodies, wherein the side panel covers outside the wiring structure, and is detachably connected to edges of the battery pack bodies; two ends of the side panel separately extend to the fixed handle and the fixed support; and the electrical harness is accommodated inside the side panel.

In an optional embodiment, a fixed block is arranged inside the fixed handle, and the first connection hole is arranged on the fixed block.

In an optional embodiment, the first connection hole is a screw hole, and the connector is a fixed screw, wherein the fixed screw passes through the second connection hole and is assembled in the screw hole, so as to keep the fixed block and the fixed support relatively fixed.

In an optional embodiment, the fixed handle is curved, and protrudes in a direction away from the battery pack bodies.

In a second aspect, the present invention provides a battery cabinet, including the stacked battery pack as described in any one of the foregoing embodiments, wherein a plurality of battery pack bodies are stacked in sequence, and the fixed handle and the fixed support on two adjacent battery pack bodies are arranged in correspondence and detachably connected, so as to keep the two adjacent battery pack bodies relatively fixed.

In an optional embodiment, the battery cabinet further includes a handle cover, wherein the handle cover covers the top of the battery pack body located at the top.

The embodiments of the present invention include the following beneficial effects.

The embodiments of the present invention provide the stacked battery pack and the battery cabinet, wherein the fixed support is arranged at the edges of the bottom of the battery pack bodies, and the fixed handle is arranged at the edges of the top of the battery pack bodies, wherein the fixed handle protrudes outwardly, and is arranged in correspondence and detachably connected with the adjacent fixed support, so that the two adjacent battery pack bodies are fixedly stacked. Compared with the prior art, the present invention adopts an outward convex handle structure, which can avoid squeezing an internal space of the battery pack bodies, and is beneficial for the maximization of space utilization of the battery pack. At the same time, the fixed handle and the fixed support on the adjacent battery pack bodies are detachably connected, which realizes the mutual position limitation and fixation of the adjacent battery pack bodies, so as to realize the thin stacking. The battery pack after stacked has a smaller occupied area and simple shapes; and the installation and operation are convenient due to the convex structure of the handle.

### BRIEF DESCRIPTION OF DRAWINGS

In order to more clearly illustrate the technical solutions of the embodiments of the present invention, the drawings to be used in the embodiments will be briefly introduced below. It should be understood that the following drawings only illustrate certain embodiments of the present invention, and therefore should not be regarded as a limitation of the scope. For a person of ordinary skill in the art, other relevant drawings may be obtained from these drawings without inventive efforts.
FIG. 1 shows a structure schematic diagram of a battery cabinet provided by an embodiment of the present invention;
FIG. 2 shows a schematic diagram of a stacked structure of stacked battery pack provided by the other embodiment of the present invention; and
FIG. 3 shows a partially enlarged schematic diagram of III in FIG. 2.

### Reference numbers:

10-battery cabinet; 100-stacked battery pack; 110-battery pack body; 130-fixed handle; 131-grasping opening; 133-connector; 135-fixed block; 150-fixed support; 170-wiring structure; 180-side panel; and 190-handle cover.

### DETAILED DESCRIPTION OF EMBODIMENTS

In order to make the purpose, technical solutions, and advantages of the embodiments of the present invention clearer and more complete, the technical solutions in the embodiments of the present invention will be clearly described below in conjunction with the drawings in the embodiments of the present invention. It is obvious that the embodiments described are partial embodiments of the present invention, and not all the embodiments. The components of embodiments of the present invention generally described and shown in the drawings herein may be arranged and designed in various different configurations.

Therefore, the following detailed description of the embodiments of the present invention provided in the drawings is not intended to limit the scope of the present invention for which protection is claimed, but rather represents only selected embodiments of the present invention. Based on the embodiments of the present invention, all the other embodiments obtained by those ordinarily skilled in the art without inventive efforts, shall fall within the scope of protection of the present invention.

It should be noted that similar labels and letters indicate similar items in the following drawings, so that once an item is defined in one drawing, it does not need to be further defined and explained in subsequent drawings.

In the description of the present invention, it should be noted that orientations or positional relationships indicated by terms such as "center", "up", "down", "left", "right", "vertical", "horizontal", "inside", "outside" are the orientations or positional relationships based on the drawings, or the orientations or positional relationships where the product of the present invention is commonly placed when used, and are only intended to facilitate the description of the present invention and simplify the description, and are not to indicate or imply that the device or element referred to must have a particular orientation, or be constructed and operated in a particular orientation, and therefore should not to be understood as limitations of the present invention. Furthermore, the terms "first", "second", and "third", etc., are used for descriptive purposes only, and should not to be understood as indicating or implying relative importance.

Additionally, the terms "horizontal", "vertical", etc., do not mean that the components are required to be absolutely horizontal or overhanging, but can be slightly inclined, for example, "horizontal" only means that the orientation is more horizontally than "vertical", and does not mean that the structure must be completely horizontal, but can be slightly inclined.

In the description of the present invention, it is to be noted that unless otherwise expressly specified and limited, the terms "arrange", "mount", "connect", and "link" shall be understood in a broad sense, for example, it can be a fixed connection, a detachable connection, or an integral connection; it can be a mechanical connection, or an electrical connection; it can be a direct connection, or an indirect connection through an intermediate medium, or a communication inside two elements. For those of ordinary skill in the art, the specific meaning of the above terms of the present invention may be understood in specific situations.

As disclosed in the background art, the stacked battery in the prior art usually adopts the concave buckle, and the upper and lower batteries are connected by directly applying the screw at the concave area. The internal space of the battery will be squeezed by adopting this method, and at the same time it is inconvenient to install the screw due to the concave structure.

Meanwhile, in the prior art, after the batteries are stacked vertically, the upper and lower batteries are connected by adding fixed plates and corresponding fixed screws at the side surface. This solution needs additional fixed plates, and the batteries are fixed by the side fixation, which provides a poorer fixation effect. Furthermore, after the batteries are stacked vertically, a male-female connection structure is formed at the side surface, and the batteries are fixed by applying screws at the side surface. This solution also adopts the side fixation, which provides the poorer fixation effect. The structure is complex, and the installation is inconvenient.

In order to solve the above problems, the present invention provides a novel stacked battery pack, which can realize thin stacking. It has a smaller occupied area after stacked; has a simple shape; is easy to be installed and operated; does not reduce the internal space of the battery; and is beneficial for the maximization of space utilization.

### First Embodiment

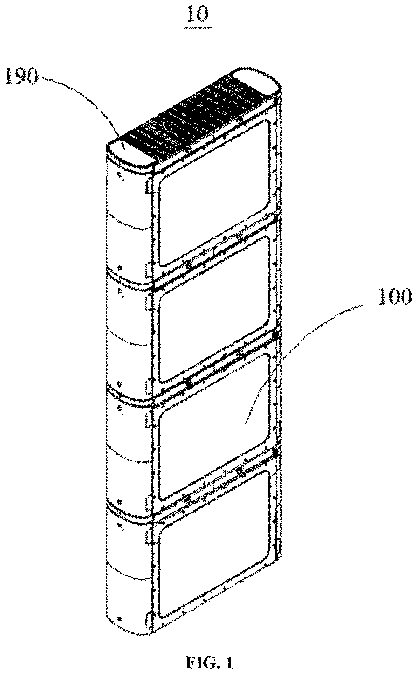

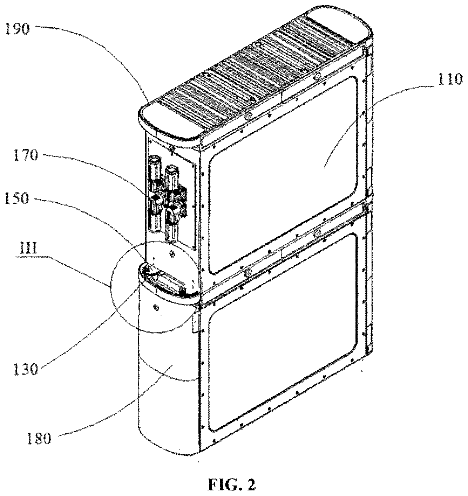

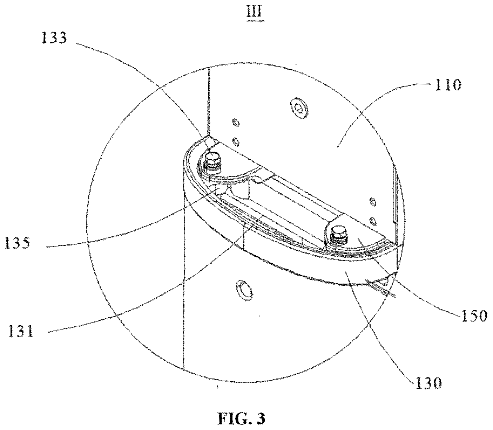

Referring to FIG. 1 to FIG. 3, the present embodiment provides a stacked battery pack 100, which can realize the thin stacking, and the fixation effect is good. It has a smaller occupied area after stacked; has the simple shape and structure; is easy to be installed and operated when stacking; does not reduce the internal space of the battery; and is beneficial for the maximization of space utilization.

The embodiment provides a stacked battery pack 100, including battery pack bodies 110, a fixed handle 130, and a fixed support 150, wherein the battery pack bodies 110 are configured for stacking; the fixed support 150 is arranged at edges of a bottom of the battery pack bodies 110; and the fixed handle 130 is arranged at edges of a top of the battery pack bodies 110, and is arranged in correspondence and detachably connected with the adjacent fixed support 150, so that two adjacent battery pack bodies 110 are fixedly stacked.

In the embodiment, the battery pack bodies 110 are of rectangular block, and are provided with a plurality of electric cells inside. When stacking, the plurality of battery pack bodies 110 are stacked, and a battery cabinet 10 is formed after a housing covers outside. On the adjacent battery pack bodies 110, the fixed handle 130 located at the top of one of the battery pack bodies 110 is correspondingly connected to the fixed support 150 at the bottom of the other battery pack body 110, thereby realizing the fixation of two adjacent battery pack bodies 110.

It is to be noted that the battery pack bodies 110 in the embodiment adopt the vertically stacked structure, and the upper surface and the lower surface of the battery pack body 110 are both planar structures, which are convenient for direct stacking. The fixed support 150 and the fixed handle 130 can be connected together after stacking, so as to complete the position limitation. Meanwhile, the fixed handle 130 can also play a role of grasping, which facilitates the carrying of the battery pack body, so as to complete the stacking action smoothly.

In the embodiment, the fixed handle 130 is arranged at the edges of two sides of the top of the battery pack body 110, and extends from two sides of the top of the battery pack body 110; and the fixed support 150 is arranged at edges of two sides of the bottom of the battery pack body 110, and extends from two sides of the bottom of the battery pack body 110, wherein the fixed handle 130 is provided with a first connection hole, and the fixed support 150 is provided with a second connection hole, wherein the second connection hole is detachably assembled with a connector 133, and connector 133 is configured to connect the adjacent fixed support 150 and fixed handle 130. Specifically, each battery pack body 110 is provided with the fixed handle 130 on two sides of the top and the fixed support 150 on two sides of the bottom. When carrying the battery pack body 110, it can be carried directly by the fixed handle 130. After the stacking is completed, the fixed handle 130 can be used for the position limitation. The fixed handle 130 herein integrates the grasping and the position limitation functions.

In the embodiment, the fixed handle 130 is of a hollow structure, and a grasping opening 130 is formed inside. Specifically, the fixed handle 130 extends outwardly from two sides of the battery pack body 110, and is of the hollow structure with the grasping opening 131. When actually carrying the battery pack body 110, a hand can be put into the grasping opening 131 and grasp the fixed handle 130, so that the battery pack body 110 is more convenient to be transferred.

In the embodiment, the side surface of the battery pack bodies 110 is further provided with a wiring structure 170, and the wiring structure 170 is connected with an electrical harness, wherein the electrical harness passes through the grasping opening 130 to be stored inside the fixed handle 130. Specifically, the electrical harness can be power wires and communication wires, wherein the electrical harness can be used for the wiring operation after the stacking is completed, and the electrical harness is stored inside the grasping openings 131, thereby realizing the position limitation and fixation of the electrical harness, and avoiding the wiring harness from running around. The fixed handle 130 herein integrates the threading function, so that the whole stacking structure is more simple and reliable.

In the embodiment, the fixed handle 130 is curved and protrudes in a direction away from the battery pack body 110. Specifically, the fixed handle 130 is of the arc structure at least at the grasping part, on the one hand, which is beneficial to improve the grasping feeling, and on the other hand, the opening range of the grasping opening 131 is also larger, which is more beneficial for the threading. Of course, in other preferred embodiments of the present invention, the fixed handle 130 may also be of a rectangle, trapezium, or other polygon, which is not specifically limited herein.

In order to further improve the grasping feeling, the upper-side and lower-side edges of the fixed handle 130 in the embodiment are further chamfered to avoid cutting hands. Of course, a rubber non-slip layer can also be additionally provided to improve the grasping friction force and improve the grasping feel.

In the embodiment, a side panel 180 is further arranged on the side surface of the battery pack body 110, wherein the side panel 180 covers outside the wiring structure 170, and is detachably connected to the edge of the battery pack body 110; two ends of the side panel 180 separately extend to fixed handle 130 and fixed support 150; and the electrical wiring harness is accommodated inside the side panel 180. Specifically, the side panel 180 in the embodiment is in the shape of a tile, the shape of which is adapted to the shape of the fixed handle 130, and keeps relatively flush with the fixed handle 130 in the vertical direction, so as to ensure the flatness of the appearance, and to realize the shielding and protection for the internal harness.

In the embodiment, a fixed block 135 is arranged inside the fixed handle 130, and the first connection hole is arranged on the fixed block 135. Specifically, the fixed block 135 is integrally arranged inside the fixed handle 130, and is provided with the first connection hole at a center position, which facilitates the installation of the connector 133.

In the embodiment, the first connection hole is a screw hole, and the connector 133 is a fixed screw, wherein the fixed screw passes through the second connection hole and is assembled in the screw hole, so as to keep the fixed block 135 and the fixed support 150 relatively fixed. Specifically, the fixed screw can be installed from top to bottom, i.e., it is passed through the second connection hole first, and then screwed into the first connection hole, so as to realize the fixed installation. Of course, in other preferred embodiments of the present invention, the first connection hole and the second connection hole both can be conventional through-hole structures, and at the same time the connector 133 is a bolt, so that the fixed block 135 and the fixed support 150 can be relatively fixed by the cooperation of the bolt and nut.

In summary, the embodiment provides a stacked battery pack 100, wherein the fixed support 150 is arranged at the edges of the bottom of the battery pack body 110, and the fixed handle 130 is arranged at the edges of the top of the battery pack body 110, wherein the fixed handle 130 protrudes outwardly, and is arranged in correspondence and detachably connected with the adjacent fixed support 150, so that two adjacent battery pack bodies 110 are fixedly stacked. The embodiment adopts a convex handle structure, which can avoid squeezing the internal space of the battery pack body 110, and is beneficial for the maximization of space utilization of the battery pack. At the same time, the fixed handle 130 and the fixed support 150 on the adjacent battery pack bodies 110 are detachably connected, which realizes the mutual position limitation and fixation of the adjacent battery pack bodies 110, so as to realize the thin stacking. The battery pack has a smaller occupied area after stacked; the shape is simple; and the installation and operation are convenient due to the convex structure of the handle.

### Second Embodiment

Referring to FIG. 1, the embodiment provides a battery cabinet 10, including a plurality of stacked battery packs 100, wherein the basic structure, principle, and technical effects of the stacked battery packs 100 are the same as those of the First Embodiment. For a brief description, what is not mentioned in the embodiment can be referred to the corresponding contents in the First Embodiment.

In the embodiment, a plurality of battery pack bodies 110 are stacked in sequence, and the fixed handle 130 and the fixed support 150 on two adjacent battery pack bodies 110 are arranged in correspondence and detachably connected, so as to keep two adjacent battery pack bodies 110 relatively fixed. Meanwhile, the battery cabinet 10 further includes a cabinet body and a control module, wherein the control module can be provided individually, or integrated into the battery pack body 110; meanwhile, the battery pack body 110 at the bottom can be installed on the ground or the base by the fixed support 150.

In the embodiment, the battery cabinet 10 further includes a handle cover 190, wherein the handle cover 190 covers the top of the battery pack body located at the top, and shields the top fixed handle 130 to achieve the shielding.

When actually assembling, a first battery pack body 110 is fixed directly on the ground or fixed on the base firstly; and a second battery pack body 110 is stacked on the first battery pack body 110, and the fixed screws at two sides are locked; and all of the battery pack bodies 110 are stacked and fixed in this method. Subsequently, the power wires and communication wires on two sides of the battery pack are used for the wiring operation, and pass through the fixed handle 130. When all operations are complete, the side panels 180 on the left and right sides are covered, and the handle cover 190 on the top is covered, so as to complete the assembly of the system.

The above are wherein only preferred embodiments of the present invention, and are not intended to limit the present invention. For those skilled in the art, the present invention can be made of various changes and variations. Any modifications, equivalent substitutions, improvements, etc., made within the spirit and principles of the present invention, shall be included in the scope of protection of the present invention.

## Claims

1. A stacked battery pack, **characterized by** comprising battery pack bodies, a fixed handle, and a fixed support, wherein the battery pack bodies are configured for stacking; the fixed support is arranged at edges of bottom of the battery pack bodies; and the fixed handle is arranged at edges of top of the battery pack bodies and protrudes outwardly, and is arranged in correspondence and detachably connected with an adjacent fixed support, so that two adjacent battery pack bodies are fixedly stacked.

2. The stacked battery pack according to claim 1, wherein the fixed handle is arranged at edges of two sides of the top of the battery pack bodies, and extends from the two sides of the top of the battery pack bodies; and the fixed support is arranged at edges of two sides of the bottom of the battery pack bodies, and extends from the two sides of the bottom of the battery pack bodies, wherein the fixed handle is provided with a first connection hole, and the fixed support is provided with a second connection hole, wherein the second connection hole is detachably assembled with a connector, and the connector is configured to connect adjacent fixed support and fixed handle.

3. The stacked battery pack according to claim 2, wherein the fixed handle is of a hollow structure, and a grasping opening is formed inside the fixed handle.

4. The stacked battery pack according to claim 3, wherein a side surface of the battery pack bodies is further provided with a wiring structure, and the wiring structure is connected with an electrical harness, wherein the electrical harness passes through the grasping opening to be stored inside the fixed handle.

5. The stacked battery pack according to claim 4, wherein a side panel is further arranged on the side surface of the battery pack bodies, wherein the side panel covers outside the wiring structure, and is detachably connected to edges of the battery pack bodies; two ends of the side panel separately extend to the fixed handle and the fixed support; and the electrical harness is accommodated inside the side panel.

6. The stacked battery pack according to claim 3, wherein a fixed block is arranged inside the fixed handle, and the first connection hole is arranged on the fixed block.

7. The stacked battery pack according to claim 6, wherein the first connection hole is a screw hole, and the connector is a fixed screw, wherein the fixed screw passes through the second connection hole and is assembled in the screw hole, so as to keep the fixed block and the fixed support relatively fixed.

8. The stacked battery pack according to claim 3, wherein the fixed handle is curved, and protrudes in a direction away from the battery pack bodies.

9. A battery cabinet, **characterized by** comprising a plurality of stacked battery packs according to any one of claims 1-8, wherein the plurality of battery pack bodies are stacked in sequence, and the fixed handle and the fixed support on two adjacent battery pack bodies are arranged in correspondence and detachably connected, so as to keep the two adjacent battery pack bodies relatively fixed.

10. The battery cabinet according to claim 9, wherein the battery cabinet further comprises a handle cover, wherein the handle cover covers a top of a battery pack body located at a top, and shields a corresponding fixed handle.
